(19) Europäisches Patentamt / European Patent Office / Office européen des brevets

(11) **EP 3 987 322 B1**

(12) **FASCICULE DE BREVET EUROPEEN**

(45) Date de publication et mention
de la délivrance du brevet:
**28.06.2023 Bulletin 2023/26**

(21) Numéro de dépôt: **20733444.2**

(22) Date de dépôt: **22.06.2020**

(51) Classification Internationale des Brevets (IPC):
*G01V 3/10* *(2006.01)*

(52) Classification Coopérative des Brevets (CPC):
**G01V 3/104**

(86) Numéro de dépôt international:
**PCT/EP2020/067338**

(87) Numéro de publication internationale:
**WO 2020/254686 (24.12.2020 Gazette 2020/52)**

(54) **DÉTECTEUR DE MÉTAUX OUVERT**

OFFENER METALLDETEKTOR

OPEN METAL DETECTOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.06.2019 FR 1906685**

(43) Date de publication de la demande:
**27.04.2022 Bulletin 2022/17**

(73) Titulaire: **Manneschi, Alessandro**
**52100 Arezzo (IT)**

(72) Inventeur: **Manneschi, Alessandro**
**52100 Arezzo (IT)**

(74) Mandataire: **Regimbeau**
**20, rue de Chazelles**
**75847 Paris Cedex 17 (FR)**

(56) Documents cités:
FR-A1- 2 545 218    US-A- 4 309 697
US-A- 6 133 829    US-A1- 2013 069 620

## Description

## DOMAINE DE L'INVENTION

La présente invention concerne le domaine des détecteurs à ondes continues conçus pour la détection d'objets ou matières non autorisés dans une zone à accès protégé.

## ETAT DE LA TECHNIQUE

Il apparaît aujourd'hui nécessaire de contrôler avec une grande fiabilité les tentatives d'introduction ou de sortie de certains produits, par exemple mais non exclusivement des armes ou des engins explosifs, dans ou hors d'une zone sensible.

Le problème ainsi posé couvre un très large éventail de situations, qui englobe notamment et non limitativement la tentative d'introduction de produits dans une zone protégée, tel qu'un magasin, une école, une gare, un organisme public voir privé, ou la tentative de sortie de produits hors d'un périmètre défini, par exemple en cas de vol dans une entreprise ou sur un site protégé.

Il a notamment été proposé depuis de nombreuses années des portiques de détection d'objets métalliques à ondes continues (« continuous wave » en anglais), c'est-à-dire des portiques utilisant des ondes d'amplitude et de fréquence constantes dans des gammes de fréquence comprises entre 70 Hz et 50 kHz typiquement, par opposition aux détecteurs à impulsions (« pulse » en anglais) qui travaillent dans le domaine temporel et utilisent des « impulsions » de champ magnétique de 100 $\mu$s à 500 $\mu$s environ et utilisent le récepteur pour surveiller l'affaiblissement du champ magnétique.

La structure générale et le fonctionnement général de ces équipements à ondes continues sont bien connus de l'homme de l'art. Pour l'essentiel, le portique comprend un ensemble émetteur logé dans une première colonne comprenant des bobinages émetteurs qui génèrent un champ magnétique et un ensemble récepteur logé dans une deuxième colonne comprenant des bobinages récepteurs qui détectent les perturbations de ce champ dues à des objets métalliques portés par un individu qui transite par le portique. La première colonne et la deuxième colonne sont raccordées ensemble par une traverse, qui peut porter des accessoires complémentaires tels qu'une caméra, une alarme sonore et/ou une alarme visuelle. On trouvera des exemples de tels portiques détecteurs de métaux dans les documents FR2545218, EP 1 750 147 et EP 1 892 542.

Les bobinages émetteurs et récepteurs sont alimentés et contrôlés par une unité de commande électronique. Afin d'assurer de permettre la démodulation du signal reçu par les bobinages récepteurs et de détecter, avec un nombre de fausses alarmes réduit, des objets métalliques transitant dans le portique, les signaux de pilotage des bobinages émetteur doivent présenter la même fréquence et une phase cohérente avec la fréquence et la phase des signaux de démodulation des bobinages récepteurs. Cette exigence est remplie en utilisant une même horloge pour définir les signaux électriques transmis aux bobinages émetteurs et pour démoduler les signaux électriques transmis par les bobinages récepteurs, et en connectant l'unité de commande à la fois à l'ensemble émetteur et à l'ensemble récepteur par voie filaire.

Toutefois, le climat actuel résultant de diverses attaques dans des lieux publics a fait naître le besoin de pouvoir déployer rapidement des postes de contrôle et de sécurité afin de permettre de détecter des armes à l'entrée des lieux publics, tels que des stades, des salles de concert, des grands magasins, etc. En effet, la surveillance de ces lieux publics requiert une installation et un retrait rapide de l'équipement d'inspection, dans la mesure où l'entrée de ces lieux publics sert également souvent de sortie de secours, de sorte que tous les obstacles (dont font partie les équipements d'inspection) doivent pouvoir être retirés instantanément.

Or, les portiques traditionnels ne sont pas adaptés à ce genre de situation dans la mesure où leurs composants doivent être assemblés et désassemblés systématiquement lors de leur installation et de leur retrait. Il est donc nécessaire d'amener et de monter les deux colonnes, la traverse ainsi que l'interface de commande sur le lieu d'inspection, puis de les désassembler, de les ranger dans leur boîte de stockage puis de les évacuer une fois l'inspection terminée.

Il a déjà été proposé de fournir les portiques préassemblés et de les stocker sur des chariots roulants adaptés afin de réduire le temps de montage des portiques. Une telle solution n'est cependant pas viable lorsque le lieu public est vaste ou qu'il ne dispose pas d'une zone de stockage adaptée des chariots et des portiques préassemblés, qui sont très encombrants.

## EXPOSE DE L'INVENTION

Un but de l'invention est de proposer un système de détection d'objets métalliques à ondes continues pouvant être déployé et retiré rapidement sur une zone donnée, tout en garantissant une détection efficace des objets métalliques avec un nombre de fausses alarmes réduit.

Il est à cet effet proposé, selon un premier aspect de l'invention un système de détection à ondes continues d'objets métalliques comprenant un ensemble émetteur et un ensemble récepteur, dans lequel :

- l'ensemble émetteur comprend au moins un bobinage émetteur logé dans une première colonne, une première horloge configurée pour émettre un premier signal électrique à une première fréquence donnée, au moins un premier générateur de fréquence configuré pour transmettre à un bobinage émetteur correspondant un signal électrique ayant une fréquence qui est synchronisée sur la première fréquence de sorte que le bobinage émetteur émette un champ magnétique,

- l'ensemble récepteur comprend :

    * au moins un bobinage récepteur logé dans une deuxième colonne, distincte de la première colonne, ledit bobinage récepteur étant configuré pour produire un signal électrique en fonction du champ magnétique émis par le bobinage émetteur, une deuxième horloge configurée pour émettre un deuxième signal à une deuxième fréquence donnée, et au moins un deuxième générateur de fréquence configuré pour déterminer un signal électrique ayant une fréquence qui est synchronisée sur la deuxième fréquence, et

    * une unité de comparaison du signal électrique produit par le bobinage récepteur avec le signal électrique déterminé par le deuxième générateur de fréquence.

Le système comprend en outre :

- un détecteur configuré pour détecter un instant de passage à zéro de l'ensemble des signaux électriques transmis par l'au moins un premier générateur de fréquence ou l'au moins un deuxième générateur de fréquence,
- un générateur de signaux configuré pour générer un signal de réalignement de phase synchronisé sur l'instant de passage à zéro détecté par le détecteur et
- des moyens de transmission comprenant une interface de communication sans fil configurés pour transmettre à l'ensemble émetteur ou à l'ensemble récepteur le signal de réalignement de phase afin de réaligner la phase de la première horloge et de la deuxième horloge.

Certaines caractéristiques préférées mais non limitatives du système de détection à ondes continues décrit ci-dessus sont les suivantes, prises individuellement ou en combinaison :

- la deuxième fréquence donnée est sensiblement égale à la première fréquence donnée.
- la première horloge est placée dans la première colonne et la deuxième horloge est placée dans la deuxième colonne.
- la première horloge et la deuxième horloge sont délocalisées en dehors de la première colonne et de la deuxième colonne.
- le détecteur est configuré pour détecter un instant de passage à zéro de l'ensemble des signaux électriques transmis par le premier générateur de fréquence ou le deuxième générateur de fréquence lorsque lesdits signaux ont une pente positive.
- la première colonne est séparée de la deuxième colonne de sorte que le système de détection est dépourvu de raccordement physique entre la première colonne à la deuxième colonne.

- l'ensemble émetteur comprend au moins deux bobinages émetteurs et autant de premiers générateur de fréquence associés, l'ensemble récepteur comprend au moins deux bobinages récepteurs et autant de deuxièmes générateur de fréquence associés.
- l'interface de communication sans fil comprend l'un au moins des éléments suivants : une interface radiofréquence, une interface optique et/ou une interface inductive. Et/ou
- l'interface de communication sans fil comprend une interface inductive, ladite interface inductive comprenant l'un au moins des bobinages émetteurs et des bobinages récepteurs de l'ensemble émetteur et de l'ensemble récepteur, respectivement.

Selon un deuxième aspect, l'invention propose un procédé pour la détection d'objets métalliques avec un système de détection à ondes continues comme décrit ci-dessus, ledit procédé comprenant les étapes suivantes :

    S1 : émettre un champ magnétique au niveau d'au moins un bobinage émetteur à partir d'un signal électrique correspondant ayant une fréquence qui est fonction de la première fréquence de la première horloge

    S2 : produire au niveau d'au moins un bobinage récepteur au moins un signal électrique en fonction du champ magnétique émis à l'étape S1

    S3 : déterminer un signal électrique ayant une fréquence qui est fonction de la deuxième fréquence de la deuxième horloge

    S4 : comparer le signal électrique produit à l'étape S2 et le signal électrique déterminé à l'étape S3

    S5 : détecter un instant de passage à zéro de l'ensemble des signaux électriques dont la fréquence est fonction de la première fréquence ou de l'ensemble des signaux électriques dont la fréquence qui est fonction de la deuxième fréquence

    S6 : générer un signal de réalignement de phase synchronisé sur l'instant de passage à zéro détecté à l'étape S5 et

    S7 : transmettre à l'aide d'une interface de communication sans fil le signal de réalignement de phase de la première horloge et de la deuxième horloge à l'ensemble émetteur ou à l'ensemble récepteur.

Certaines caractéristiques préférées mais non limitatives du procédé sont les suivantes, prises individuellement ou en combinaison :

- les étapes S2 et S3 sont simultanées.
- au cours de l'étape S5, l'instant de passage à zéro est détecté lorsque l'ensemble des signaux électriques dont la fréquence est fonction de la première fréquence ou l'ensemble des signaux électriques dont la fréquence qui est fonction de la deuxième fréquence ont une pente positive.

- au cours de l'étape S6, le signal de réalignement de phase est généré au niveau de l'ensemble émetteur et transmis à l'ensemble récepteur, de sorte à réaligner la phase de la deuxième horloge sur celle de la première horloge. Et/ou

- au cours de l'étape S6, le signal de réalignement de phase est généré au niveau de l'ensemble récepteur et transmis à l'ensemble émetteur, de sorte à réaligner la phase de la première horloge sur celle de la deuxième horloge.

**DESCRIPTION DES FIGURES**

D'autres caractéristiques, buts et avantages de l'invention ressortiront de la description qui suit, qui est purement illustrative et non limitative, et qui doit être lue en regard des dessins annexés sur lesquels :

La figure 1 illustre de façon schématique un système de détection conforme à un premier mode de réalisation de l'invention ;

La figure 2 illustre de façon schématique un système de détection conforme à un deuxième mode de réalisation de l'invention ;

La figure 3 illustre la fréquence du signal électrique transmis à trois bobinages émetteurs, les impulsions correspondantes reçues en entrée du détecteur et les impulsions générées par le générateur de signaux correspondant d'un exemple de réalisation d'un système de détection conforme à l'invention ;

La figure 4 illustre les fréquences sinusoïdales des trois signaux électriques de la figure 3, ainsi que l'instant de passage à zéro avec une pente positive pour ces trois signaux électriques ;

La figure 5 illustre un exemple d'ensemble de détection comprenant trois systèmes de détection conforme à l'invention ; et

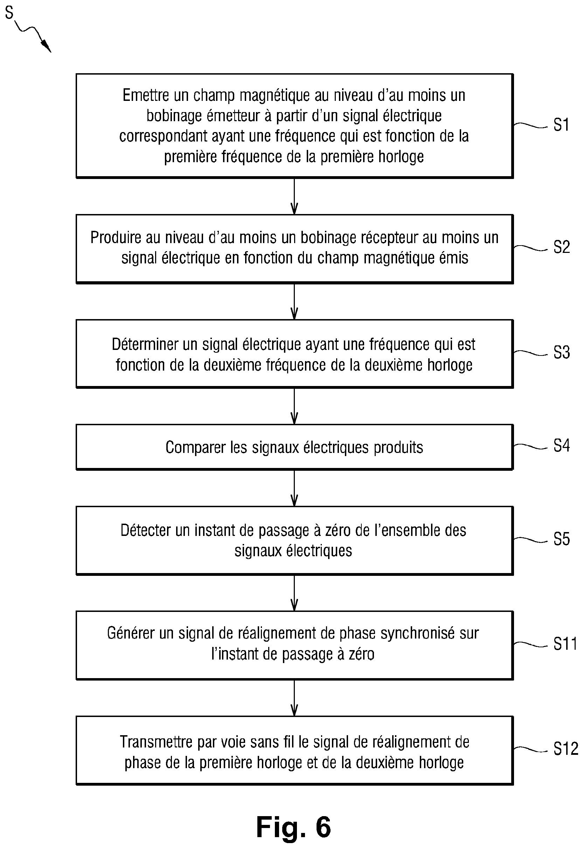

La figure 6 est un organigramme d'étapes d'un procédé de détection selon un mode de réalisation de l'invention.

Sur l'ensemble des figures, les éléments similaires portent des références identiques.

**DESCRIPTION DETAILLEE DE L'INVENTION**

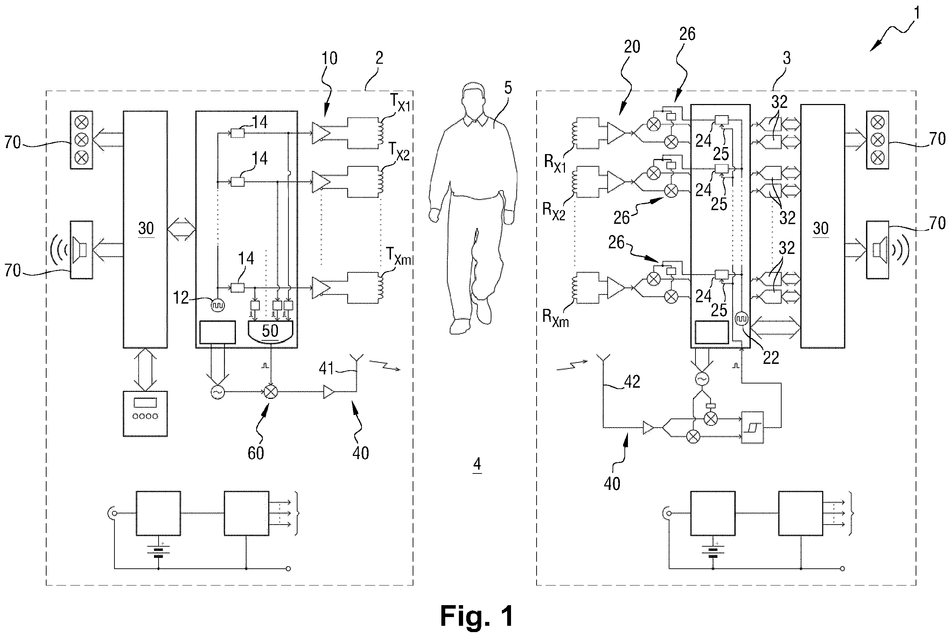

On a représenté sur les figures annexées, notamment sur la figure 1, un système de détection à ondes continues conforme à la présente invention comprenant deux colonnes 2, 3 définissant entre elles un canal 4 par lequel peuvent transiter des individus 5 à contrôler. A titre d'exemple non limitatif, la hauteur des colonnes 2, 3 peut être comprise entre 150 cm et 200 cm, avantageusement entre 150 cm et 180 cm et l'écart entre les deux colonnes 2, 3 est avantageusement compris entre 70 cm et 100 cm.

Par colonne 2, 3, on comprendra ici toute embase, quelque soit sa forme, susceptible de loger les moyens de détection et de définir le canal de passage des individus 5 à contrôler. La colonne pourra ainsi avoir la forme d'un poteau sensiblement cylindrique ou tubulaire, de panneaux sensiblement plans ou délimitant un espace en forme d'ogive ou elliptique, etc.

Le système 1 de détection comprend un ensemble émetteur 10, un ensemble récepteur 20 et des moyens d'analyse 30. L'ensemble émetteur 10 comprend au moins un bobinage émetteur Tx1, ..., Txm logé dans une première colonne 2 et configuré pour émettre un champ magnétique. L'ensemble récepteur 20 comprend au moins un bobinage récepteur Rx1,...,Rxn logé dans une deuxième colonne 3, distincte de la première colonne 2, qui est configuré pour détecter des perturbations du champ magnétique dues à des objets métalliques. Enfin, les moyens d'analyse 30 sont adaptés pour analyser les signaux issus des bobinages récepteurs pour détecter la présence d'objets métalliques portés par un individu 5 transitant par ledit canal formé entre les deux colonnes 2, 3.

Les bobinages émetteurs Tx1, ..., Txm et récepteurs Rx1,...,Rxn couvrent de préférence toute la hauteur des colonnes 2, 3. Ils peuvent faire l'objet de nombreux modes de réalisation connus, tels qu'utilisés de nos jours dans des portiques classiques détecteurs de métaux. Leur fonctionnement en soi est également classique. La structure et le fonctionnement des bobinages émetteurs Tx1, ..., Txm et récepteurs $R \times 1,...,R \times n$ ne seront donc pas décrits dans le détail par la suite. On notera cependant que de préférence chaque bobinage émetteur $T \times 1,...,T \times m$ ou récepteur Rx1,...,Rxn peut être formé par plusieurs enroulements séparés dont la répartition relative sur la hauteur des colonnes 2, 3 est adaptée pour optimiser la détection et est piloté par les moyens d'analyse 30 pour émettre des champs inductifs alternatifs sur une plage de fréquences et recevoir l'ensemble de ces champs inductifs alternatifs sur ladite plage de fréquences, respectivement.

De préférence les champs inductifs détecteurs de métal générés par les bobinages émetteurs Tx1, ..., Txm et récepteurs Rx1,...,Rxn sont dans la gamme de fréquences comprise entre 70 Hz et 50 kHz, de préférence entre 100 Hz et 50 kHz.

Afin de déployer et de retirer rapidement le système 1 dans un poste de contrôle donné, la première colonne 2 et la deuxième colonne 3 du système 1 sont distinctes et séparées, c'est-à-dire qu'elles ne sont plus raccordées physiquement l'une à l'autre par une traverse ni par des câbles électriques, et les signaux de l'ensemble émetteur 10 et de l'ensemble récepteur 20 sont réalignés en phase grâce à des moyens de transmission 40 sans fil.

Pour cela, l'ensemble émetteur 10 comprend en outre une première horloge 12 configurée pour émettre un premier signal électrique à une première fréquence F1 donnée et au moins un premier générateur de fréquence 14 configuré pour transmettre à un bobinage émetteur T×1,...,T×m correspondant un signal électrique ayant une fréquence qui est synchronisée sur la première fréquence F1 de sorte que le bobinage émetteur T×1,...,T×m émette un champ magnétique.

Par ailleurs, l'ensemble récepteur 20 comprend une deuxième horloge 22 configurée pour émettre un deuxième signal à une deuxième fréquence F2 donnée sensiblement égale à la première fréquence F1 donnée, et au moins un deuxième générateur de fréquence 24 configuré pour déterminer un signal électrique ayant une fréquence qui est synchronisée sur la deuxième fréquence F2, ainsi qu'une unité de comparaison du signal électrique produit par le bobinage récepteur R×1,...,R×n avec le signal électrique déterminé par le deuxième générateur de fréquence 24.

Enfin, le système 1 comprend également :

- un détecteur 50 configuré pour détecter un instant de passage à zéro de l'ensemble des signaux électriques transmis par le premier générateur de fréquence 14 ou le deuxième générateur de fréquence 24,
- un générateur de signaux 60 configuré pour générer un signal de réalignement de phase synchronisé sur l'instant de passage à zéro détecté par le détecteur 50 et
- les moyens de transmission 40 sans fil, qui sont configurés pour transmettre à l'ensemble émetteur 10 ou à l'ensemble récepteur 20 le signal de réalignement de phase afin de réaligner la phase de la première horloge 12 et de la deuxième horloge 22.

On comprendra que la première horloge 12 et la deuxième horloge 22 ne sont pas nécessairement logées dans la première colonne 2 et la deuxième colonne 3 mais peuvent être fixées à l'extérieur de ces colonnes 2, 3 ou, en variante, distantes desdites colonnes 2, 3 et connectées, par voie filaire ou non filaire, aux générateurs de fréquence correspondants et aux moyens de transmission 40 sans fil.

Dans ce qui suit, l'invention sera décrite par souci de simplicité dans le cas où la première horloge 12 et la deuxième horloge 22 sont logées dans la première colonne 2 et dans la deuxième colonne 3, respectivement. Par ailleurs, l'invention sera décrite dans le cas où le premier et le deuxième générateur de fréquence 14, 24 comprennent des diviseurs de fréquence. Ceci n'est cependant pas limitatif, tout dispositif logique programmable capable de générer des fréquences synchronisées en partant d'une même horloge 12, 22 pouvant être utilisé.

La première horloge 12 et la deuxième horloge 22 émettent des signaux électriques à une première et une deuxième fréquence F1, F2, respectivement. Dans une forme de réalisation, la première fréquence F1 est sensiblement identique à la deuxième fréquence F2. On notera toutefois que la fréquence des horloges 14, 24 étant généralement basées sur la résonance mécanique d'un quartz, la première et la deuxième fréquence F1, F2 sont nécessairement légèrement différentes en raison du biais induit par les oscillations des quartz. Cela explique d'ailleurs la nécessité de réaligner la phase de la première horloge 12 et de la deuxième horloge 22 afin de permettre la démodulation des signaux reçus par les bobinages récepteurs Rx1,...,Rxn.

## L'ensemble émetteur 10

L'ensemble émetteur 10, qui est logé dans la première colonne 2 du système 1, comprend au moins un bobinage émetteur Tx1,...,Txm. De préférence, l'ensemble émetteur 10 comprend plusieurs bobinages émetteurs Tx1,...,Txm, par exemple entre quatre et dix.

Chaque bobinage émetteur T×1,...,T×m est configuré pour recevoir un signal électrique et émettre un champ magnétique qui dépend de la fréquence du signal électrique reçu. De préférence, les fréquences des signaux électriques transmis aux bobinages émetteurs T×1,...,T×m sont toutes différentes, tout en restant un sous-multiple de la première fréquence F1 de la première horloge 12. Pour cela, la première horloge 12 est connectée à un ensemble de premiers diviseurs de fréquences 14 qui sont chacun raccordés à un bobinage émetteur T×1,...,T×m associé et sont chacun associé à une consigne de division N1,... Nm différente.

A titre d'exemple non limitatif, la fréquence Fi du signal électrique reçu par un bobinage émetteur Txi (i compris entre 1 et m) donné est égale au quotient de la fréquence de la première horloge 12 et d'une consigne de division Ni prédéfinie, où la consigne de division Ni varie d'un diviseur de fréquence 14 à un autre. De préférence, les fréquences Fi générées par les premiers diviseurs de fréquence 14 sont différentes les unes des autres

$$(N_i \neq N_j \ \forall \ (i, j) \in [1 ; m])$$

Par ailleurs, chaque bobinage émetteur Txi peut être excité par au moins une de ces fréquences

$$F_i \ (i \in [1 ; m]))$$

## L'ensemble récepteur 20

L'ensemble récepteur 20, qui est logé dans la deuxième colonne 3 du système 1, comprend au moins un bobinage récepteur Rx1,...,Rxn. De préférence, l'ensemble récepteur 20 comprend plusieurs bobinages récepteurs R×1,...,R×n, par exemple entre quatre et dix. L'ensemble récepteur 20 peut comprendre autant de bobinages récepteurs Rx1,...,Rxn que l'ensemble émetteur 10 comprend de bobinages émetteurs T×1,...,T×m, ou un nombre différent ($m \neq n$).

Chaque bobinage récepteur Rx1,...,Rxn est configuré pour détecter des perturbations du champ magnétique dues à des objets métalliques et générer un signal électrique dont la fréquence dépend du champ magnétique détecté.

La deuxième horloge 22 émet un deuxième signal électrique ayant la deuxième fréquence F2 donnée. Ce signal électrique est transmis aux deuxièmes diviseurs de fréquence 24, qui génèrent en sortie un signal électrique dont la fréquence est un sous-multiple de la deuxième fréquence F2.

Les fréquences ainsi obtenues par les deuxièmes diviseurs de fréquence 24 sont transmises, pour chaque bobinage récepteur Rx1,...,Rxn et chaque deuxième diviseur de fréquence 24, à une unité de comparaison 26 associée qui a pour objectif de démoduler le signal électrique généré par le bobinage récepteur R×1,...,R×n. A cet effet, l'unité de comparaison 26 compare, pour chaque bobinage récepteur R×1,...,R×n, le signal électrique produit par ce bobinage récepteur Rx1,...,Rxn avec le signal électrique déterminé par le deuxième diviseur de fréquence 24. Cette information est ensuite communiquée aux moyens d'analyse 30 qui en déduisent si le champ magnétique généré par l'ensemble émetteur 10 a été perturbé par des objets métalliques.

Par exemple, l'unité de comparaison 26 peut comprendre une unité de soustraction qui est configurée pour faire la différence entre le signal électrique produit par le bobinage récepteur R×1,...,R×n et le signal électrique déterminé par le deuxième diviseur de fréquence 24.

Dans l'exemple de réalisation illustré sur les figures, l'unité de comparaison 26 comprend un mélangeur associé à chaque bobinage Rx1,...,Rxn configuré pour déterminer la composante en phase (In-phase, I) et en quadrature (Q) du signal électrique en mélangeant le signal électrique produit par le bobinage récepteur Rx1,...,Rxn et le signal électrique déterminé par le deuxième diviseur de fréquence 24, ce mélange étant réalisé en appliquant d'une part une phase de référence et d'autre part un déphasage de $\pi/2$ au signal électrique généré par le deuxième diviseur de fréquence 24 associé. Ces composantes sont ensuite envoyées à un convertisseur analogique-numérique 32 qui les convertit en données numériques puis les communique aux moyens d'analyse 30.

On notera que, de manière analogue à l'ensemble émetteur 10, les fréquences générées par les deuxièmes diviseurs de fréquence 24 correspondent à celles générées par les premiers diviseurs de fréquence 14, et que chaque bobinage Rx1,...,Rxn peut être démodulé par une ou plusieurs de ces fréquences.

### Le détecteur 50

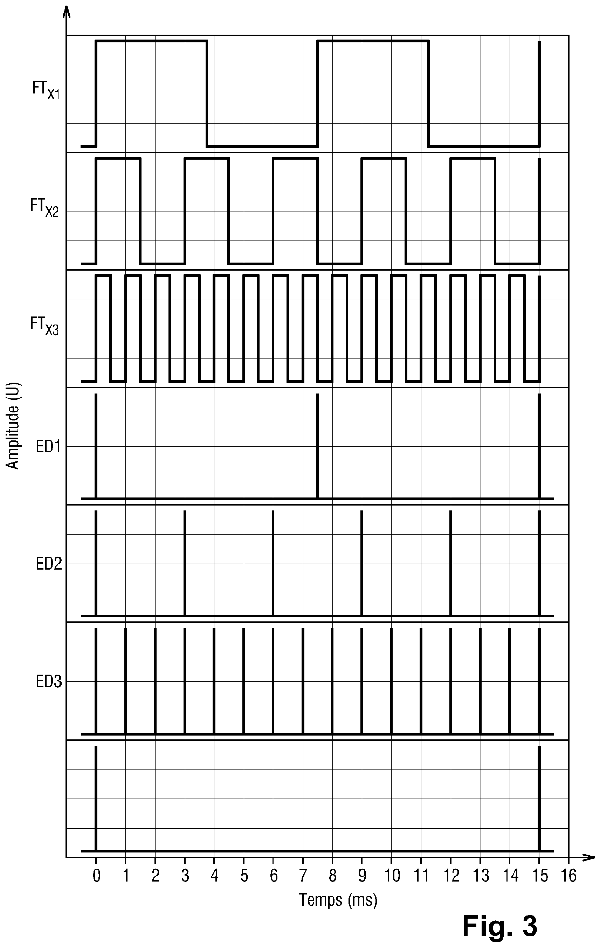

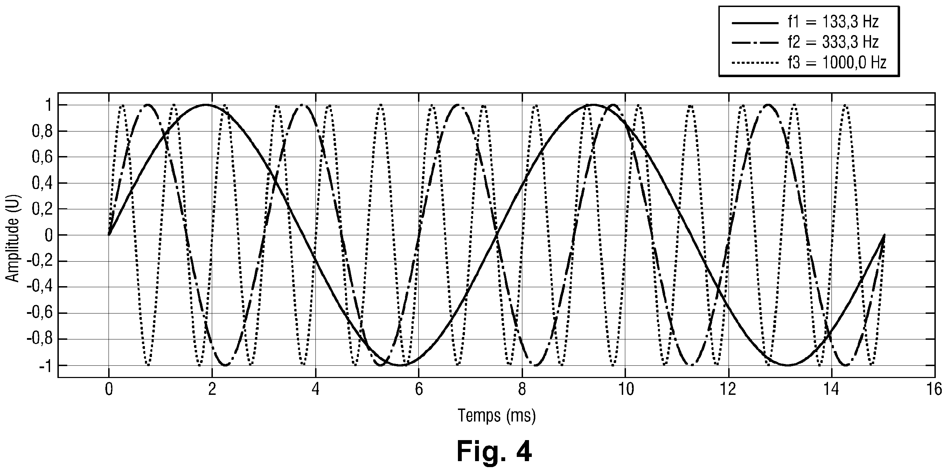

Le détecteur 50 est configuré pour détecter un instant de passage à zéro de l'ensemble des signaux électriques transmis par le premier diviseur de fréquence 14 ou le deuxième diviseur de fréquence 24 (voir Figures 3 et 4).

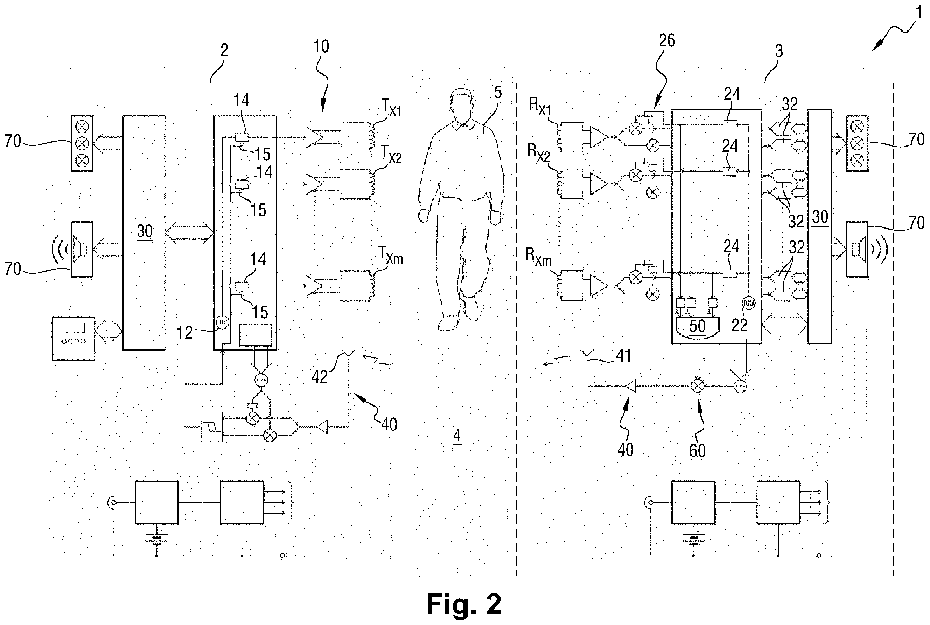

Dans l'exemple de réalisation illustré en figure 1, la phase de la deuxième horloge 22 est réalignée sur la phase de la première horloge 12. Le détecteur 50 reçoit donc l'ensemble des signaux électriques transmis par le(s) premiers(s) diviseur(s) de fréquence 14 et détermine l'instant de passage à zéro de ces signaux électriques. En variante, sur la figure 2, la phase de la première horloge 12 est réalignée sur la phase de la deuxième horloge 22. Le détecteur 50 reçoit donc l'ensemble des signaux électriques transmis par le(s) deuxième(s) diviseur(s) de fréquence 24 et détermine l'instant de passage à zéro de ces signaux électriques.

Dans la mesure où les signaux électriques sont sinusoïdaux (Figure 4), chaque signal électrique prend successivement la valeur nulle avec une pente positive et une pente négative. En d'autres termes, la valeur du signal peut par exemple partir de zéro, puis augmenter (pente positive) jusqu'à atteindre un maxima local, puis diminuer jusqu'à atteindre un minima local (pente négative) en passant par zéro. Il en découle que, sur l'ensemble des signaux électriques, il existe plusieurs instants de passage à zéro de l'ensemble des signaux électriques, où certains de ces signaux ont une pente négative tandis que d'autres ont une pente positive. Afin de réaligner la phase du signal électrique de la deuxième horloge 22 sur la phase du signal électrique de la première horloge 12, le détecteur 50 est configuré pour détecter l'instant de passage à zéro de l'ensemble des signaux électrique transmis par le premier ou le deuxième diviseur de fréquence 14, 24 lorsque ces signaux ont tous une pente positive. En variante, on comprendra bien entendu que le détecteur 50 peut également être configuré pour détecter l'instant de passage à zéro de ces signaux lorsqu'ils ont tous une pente négative.

### Le générateur de signaux 60

Une fois cet instant détecté, le générateur de signaux 60 génère le signal de réalignement de phase. Ce signal est synchronisé sur l'instant de passage à zéro détecté par le détecteur 50.

Le signal de réalignement de phase peut notamment comprendre une impulsion (Figure 3).

Le générateur de signaux 60 et le détecteur 50 sont de préférence logés dans la colonne 2, 3 logeant les diviseurs de fréquence 14, 24 dont le détecteur 50 détermine l'instant de passage à zéro.

### Les moyens de transmission 40

Les moyens de transmission 40 comprennent des interfaces de communication 41, 42 configurée pour transmettre à une interface de communication de l'ensemble émetteur 10 ou de l'ensemble récepteur 20 le signal de réalignement de phase afin de réaligner la phase de la première horloge 12 et de la deuxième horloge 22. Les interfaces de communication 41, 42 sont connectées soit au générateur de signaux 60 (lorsque l'interface de communication 41 est configurée pour transmettre le signal de réalignement de phase) soit aux diviseurs de fréquence 14, 24 (lorsque l'interface de communication 42 est configurée pour recevoir le signal de réalignement de phase). Les interfaces de communication 41, 42 comprennent une interface sans fil afin de permettre la mise en place facile et rapide du système 1 de détection, par exemple une interface du type radiofréquence, Wi-Fi, Bluetooth, par communication optique (typiquement infrarouge à l'aide par exemple de photodiodes) ou encore inductive, etc. On notera que, dans le cas de la communication optique, le Demandeur s'est aperçu du fait que le masquage temporaire éventuel des interfaces sans fil infrarouge ne portait pas préjudice au fonctionnement du système dans la mesure où les horloges 12, 22 restent très précises et peuvent se réaligner sur le signal de réalignement de phase suivant. Le cas échéant, lorsque les interfaces de communication comprennent une interface inductive, ladite interface inductive peut optionnellement comprendre l'un au moins des bobinages émetteurs $T \times 1,...,T \times m$ et des bobinages récepteurs $R \times 1,...,R \times n$ de l'ensemble émetteur 10 et de l'ensemble récepteur 20, respectivement. En d'autres termes, l'interface inductive peut utiliser tout ou partie des bobinages émetteurs $Tx1,...,Txm$ et récepteurs $R \times 1,...,R \times n$ du système de détection 1 pour la transmission et la réception du signal de réalignement de phase afin de réaligner la phase de la première horloge 12 et de la deuxième horloge 22.

Par exemple, les interfaces de communication 41, 42 des moyens de transmission 40 comprennent un modulateur 41 configuré pour moduler un signal porteur avec le signal de réalignement de phase du générateur afin de le communiquer, par exemple par radiofréquences, à l'ensemble émetteur 10 ou l'ensemble récepteur 20, et un démodulateur 42 configuré pour démoduler le signal porteur et extraire le signal de réalignement de phase et le transmettre ensuite à l'ensemble récepteur 20 ou à l'ensemble émetteur 10, respectivement.

Ce signal de réalignement est ensuite communiqué par le démodulateur 42 à l'ensemble des diviseurs de fréquence 14, 24 qui est piloté par l'horloge 12, 22 dont la phase doit être réalignée. Typiquement, dans l'exemple de réalisation illustré en figure 1, le signal de réalignement est transmis à l'ensemble des deuxièmes diviseurs de fréquence 24. Plus précisément, le signal de réalignement est transmis à l'entrée de remise à zéro des deuxièmes diviseurs de fréquence 24 afin de les réaligner en phase et d'assurer ainsi la cohérence de phase dans le système 1 de détection.

**Les moyens d'analyse 30**

Comme indiqué précédemment, l'unité de comparaison 26 associée à chaque bobinage récepteur $R \times 1,...R \times n$ envoie aux moyens d'analyse 30 une information sur le signal électrique généré par le bobinage récepteur $Rx1,...,Rxn$ correspondant et démodulé à l'aide du signal électrique déterminé par le deuxième diviseur de fréquence 24. Les moyens d'analyse 30 en déduisent alors si champ magnétique généré par l'ensemble émetteur 10 a été perturbé par des objets métalliques.

Lorsque les moyens d'analyse 30 déterminent que le champ magnétique a été perturbé par un ou des objets métalliques, les moyens d'analyse 30 envoient des instructions de génération d'une alarme (sonore et/ou optique) à un ou plusieurs émetteurs 70 (haut-parleur, DEL (pour Diode Electroluminescente), lampe clignotante, etc.). Les émetteurs 70 peuvent être logées dans la deuxième colonne 3 et/ou dans la première colonne 2. Lorsque les émetteurs d'alarme 70 sont logés en tout ou partie dans la première colonne 2, les instructions de génération d'alarme sont communiquées aux émetteurs 70 de la première colonne 2 par l'intermédiaire des moyens de transmission 40 (voir figure 3).

Les moyens d'analyse 30 peuvent notamment comprendre un calculateur de type processeur, microprocesseur, microcontrôleur, etc., configuré pour exécuter des instructions.

On notera que les interfaces de communication 41, 42 des moyens de transmission 40 peuvent, le cas échéant, en outre être configurés pour transmettre et recevoir des signaux de diagnostique, ou pour permettre au système 1 de détection de communiquer avec un autre système 1 de détection comprenant, de manière analogue, un ensemble émetteur 10, un ensemble récepteur 20, un détecteur 50, un générateur de signaux 60 et des moyens de transmission 40. Le cas échéant, les réglages des systèmes 1 de détection peuvent alors être synchronisés, grâce à leur interface de communication 41, 42, par voie sans fil. Par exemple, l'ensemble émetteur 10 d'un premier système 1 de détection peut transmettre les informations de synchronisation à l'ensemble émetteur 10 d'un deuxième système 1 de détection, par l'intermédiaire de leur interface de communication respective 41, 42.

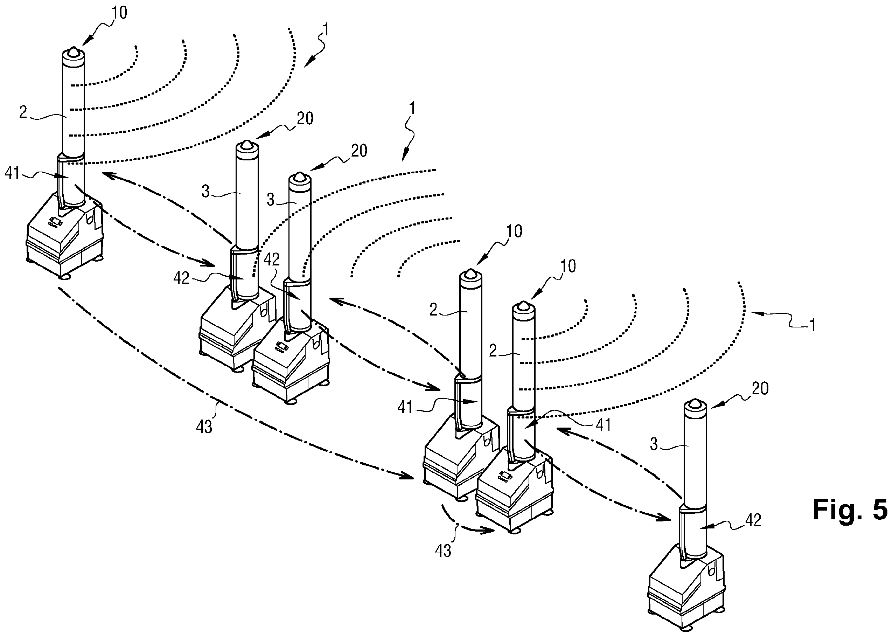

Ainsi, on a illustré sur la figure 5 un ensemble de détection comprenant trois systèmes de détection 1 conforme à l'invention. Chaque système de détection 1 comprend un ensemble émetteur 10 et un ensemble récepteur 20 comprenant chacun une interface de communication 41, 42 afin d'envoyer et de recevoir, respectivement, le signal de réalignement de phase de leurs horloges 12, 22 respectives. Par ailleurs, l'ensemble émetteur 10 de chaque système de détection 1 transmet, via son interface de communication 41, 42, des informations de synchronisation à l'ensemble émetteur du système de détection adjacent (canal de communication 43).

## Le procédé de détection S

La détection d'objets métalliques à l'aide d'un système 1 de détection à ondes continues peut notamment être réalisée conformément aux étapes suivantes. Dans ce qui suit, l'invention va être décrite dans le cas où l'ensemble émetteur 10 comprend plusieurs bobinages émetteurs Tx1,...,Txm et l'ensemble récepteur 20 comprend plusieurs bobinages récepteurs Rx1,...,Rxn. Comme nous l'avons vu plus haut, ceci n'est cependant pas limitatif.

Au cours d'une première étape S1, les bobinages émetteurs Tx1,...,Txm émettent un champ magnétique à partir d'un signal électrique ayant une fréquence qui est fonction de la première fréquence F1 de la première horloge 12.

Pour cela, la première horloge 12 envoie un premier signal électrique ayant la première fréquence F1 donnée aux premiers diviseurs de fréquence 14. Chaque premier diviseur de fréquence 14 divise alors la première fréquence F1 par sa consigne de division de division $N_1, ..., N_m$ associée. Pour chaque bobinage émetteur $T{\times}1,...,T{\times}m$, un oscillateur produit alors un signal électrique ayant la fréquence ainsi déterminée par le premier diviseur de fréquence 14 associé et le transmet au bobinage émetteur Tx1,...,Txm afin de générer un champ magnétique.

Au cours d'une deuxième étape S2, les champs magnétiques émis à l'étape S1 induisent un signal électrique dans chaque bobinage récepteur Rx1,...,Rxn.

Au cours d'une troisième étape S3, qui est simultanée à la deuxième étape S2, la deuxième horloge 22 envoie un deuxième signal électrique ayant la deuxième fréquence F2 donnée aux deuxièmes diviseurs de fréquence 24. Chaque deuxième diviseur de fréquence 24 divise alors la deuxième fréquence F2 par sa consigne de division de division $N_1, ..., N_m$ associée. Pour chaque bobinage récepteur $R{\times}1,...,R{\times}n$, un oscillateur produit donc un signal électrique ayant la fréquence ainsi déterminée par le deuxième diviseur de fréquence 24 associé.

Au cours d'une quatrième étape S4, le signal électrique induit dans chaque bobinage récepteur $R{\times}1,...,R{\times}n$ est comparé au signal électrique déterminé par le deuxième diviseur de fréquence 24 associé.

Pour cela, pour chaque bobinage récepteur Rx1,...,Rxn, l'unité de comparaison 26 reçoit en entrée le signal électrique induit dans le bobinage récepteur Rx1,...,Rxn et le signal électrique déterminé par le deuxième diviseur de fréquence 24 associé. Puis, l'unité de comparaison 26 détermine les composantes en phase (I) et en quadrature (Q) du signal électrique.

Les composante phase (I) et en quadrature (Q) de chaque signal électrique ainsi déterminées sont alors transmises à un convertisseur analogique-numérique 32 associé, qui les convertit en données numériques puis les communique aux moyens d'analyse 30.

De manière connue en soi, les moyens d'analyse 30 en déduisent alors si champ magnétique généré par l'ensemble émetteur 10 a été perturbé par des objets métalliques.

Au cours d'une cinquième étape S5, le détecteur 50 détecte un instant de passage à zéro de l'ensemble des signaux électriques dont la fréquence est fonction de la première fréquence F1 ou de l'ensemble des signaux électriques dont la fréquence qui est fonction de la deuxième fréquence F2.

Lorsque c'est la phase de la deuxième horloge 22 qui est réalignée sur la phase de la première horloge 12 (Figure 1), au cours de la cinquième étape, le détecteur 50 détecte l'instant de passage à zéro de l'ensemble des signaux électriques transmis par le(s) premiers(s) diviseur(s) de fréquence 14. Lorsque c'est la phase de la première horloge 12 qui est réalignée sur la phase de la deuxième horloge 22 (Figure 2), au cours de la cinquième étape S5, le détecteur 50 détecte l'instant de passage à zéro de l'ensemble des signaux électriques transmis par le(s) deuxième(s) diviseur(s) de fréquence 24.

Dans une forme de réalisation, l'instant de passage à zéro est détecté lorsque l'ensemble desdits signaux électriques (transmis par les premiers ou les deuxièmes diviseurs de fréquence 14, 24) ont une pente positive (c'est-à-dire que la valeur du signal est négative immédiatement avant le passage à zéro et positive immédiatement après). En variante, l'instant de passage à zéro peut être détecté lorsque l'ensemble desdits signaux électriques (transmis par les premiers ou les deuxièmes diviseurs de fréquence 10, 24) ont une pente négative.

Au cours d'une sixième étape S6, un signal de réalignement de phase qui est synchronisé sur l'instant de passage à zéro détecté à l'étape S5 est généré. Ce signal de réalignement de phase est généré par le générateur de signaux 60.

Au cours d'une septième étape S7, le signal de réalignement de phase est transmis à l'ensemble émetteur 10 ou à l'ensemble émetteur 10 pour réaligner la phase de la première horloge 12 et de la deuxième horloge 22.

Par exemple, lorsque la phase de la deuxième horloge 22 est réalignée sur la phase de la première horloge 12 (Figure 1), le signal de réalignement de phase est généré au niveau de l'ensemble émetteur 10. Ce signal est donc transmis à l'interface de communication 41 de l'ensemble émetteur 10, qui est alors un modulateur, afin qu'il module le signal porteur avec le signal de réalignement de phase du générateur pour le communiquer à l'interface de communication 42 de l'ensemble récepteur 20. Cette dernière comprend alors un démodulateur 42 configuré pour démoduler le signal porteur ainsi reçu et extraire le signal de réalignement de phase. Le signal ainsi démodulé est ensuite transmis à l'entrée de remise à zéro 25 de l'ensemble des deuxièmes diviseurs de fréquence 24 afin de les réaligner en phase avec la première horloge 12 et d'assurer ainsi la cohérence de phase dans le système 1 de détection.

En variante, lorsque c'est la phase de la première horloge 12 qui est réalignée sur la phase de la deuxième horloge 22 (Figure 2), le signal de réalignement de phase est généré au niveau de l'ensemble récepteur 20. Ce signal est donc transmis à l'interface de communication 41 de l'ensemble récepteur 20, qui est alors un modulateur, qui le communiquer à l'interface de communication 42 de l'ensemble émetteur 10, de manière analogue à ce qui a été décrit précédemment. Le signal ainsi démodulé est ensuite transmis à l'entrée de remise à zéro 15 de l'ensemble des premiers diviseurs de fréquence 14 afin de les réaligner en phase avec la deuxième horloge 22 et d'assurer ainsi la cohérence de phase dans le système 1 de détection.

**Revendications**

1. Système (1) de détection à ondes continues d'objets métalliques comprenant un ensemble émetteur (10) et un ensemble récepteur (20), dans lequel :

   - l'ensemble émetteur (10) comprend au moins un bobinage émetteur (Tx1,...,Txm) logé dans une première colonne (2), une première horloge (12) configurée pour émettre un premier signal électrique à une première fréquence F1 donnée, au moins un premier générateur de fréquence (14) configuré pour transmettre à un bobinage émetteur (Tx1,...,Txm) correspondant un signal électrique ayant une fréquence qui est synchronisée sur la première fréquence F1 de sorte que le bobinage émetteur (Tx1,...,Txm) émette un champ magnétique ; et
   - l'ensemble récepteur (20) comprend :

     * au moins un bobinage récepteur (R×1,...,R×n) logé dans une deuxième colonne (3), distincte de la première colonne (2), ledit bobinage récepteur (Rx1,...,Rxn) étant configuré pour produire un signal électrique en fonction du champ magnétique émis par le bobinage émetteur (T×1,...,T×m), une deuxième horloge (22) configurée pour émettre un deuxième signal à une deuxième fréquence F2 donnée, et au moins un deuxième générateur de fréquence (24) configuré pour déterminer un signal électrique ayant une fréquence qui est synchronisée sur la deuxième fréquence F2; et
     * une unité de comparaison (26) du signal électrique produit par le bobinage récepteur (R×1,...,R×n) avec le signal électrique déterminé par le deuxième générateur de fréquence (24) ;

   le système (1) de détection étant **caractérisé en ce**

qu'il comprend en outre :

   - un détecteur (50) configuré pour détecter un instant de passage à zéro de l'ensemble des signaux électriques transmis par l'au moins un premier générateur de fréquence (14) ou l'au moins un deuxième générateur de fréquence (24) ;
   - un générateur de signaux (60) configuré pour générer un signal de réalignement de phase synchronisé sur l'instant de passage à zéro détecté par le détecteur (50) ; et
   - des moyens de transmission (40) comprenant une interface de communication (41, 42) sans fil configurés pour transmettre à l'ensemble émetteur (10) ou à l'ensemble récepteur (20) le signal de réalignement de phase afin de réaligner la phase de la première horloge (12) et de la deuxième horloge (22).

2. Système (1) selon la revendication 1, dans lequel la deuxième fréquence F2 donnée est sensiblement égale à la première fréquence F1 donnée.

3. Système (1) selon l'une des revendications 1 ou 2, dans lequel la première horloge (12) est placée dans la première colonne (2) et la deuxième horloge (22) est placée dans la deuxième colonne (3).

4. Système (1) selon l'une des revendications 1 ou 2, dans lequel la première horloge (12) et la deuxième horloge (22) sont délocalisées en dehors de la première colonne (2) et de la deuxième colonne (3).

5. Système (1) selon l'une des revendications 1 à 4, dans lequel le détecteur (50) est configuré pour détecter un instant de passage à zéro de l'ensemble des signaux électriques transmis par le premier générateur de fréquence (14) ou le deuxième générateur de fréquence (24) lorsque lesdits signaux ont une pente positive.

6. Système (1) selon l'une des revendications 1 à 5, dans lequel la première colonne (2) est séparée de la deuxième colonne (3) de sorte que le système (1) de détection est dépourvu de raccordement physique entre la première colonne (2) à la deuxième colonne (3).

7. Système (1) selon l'une des revendications 1 à 6, dans lequel l'ensemble émetteur (10) comprend au moins deux bobinages émetteurs (Tx1,...,Txm) et autant de premiers générateur (14) de fréquence associés, l'ensemble récepteur (20) comprend au moins deux bobinages récepteurs (R×1,...,R×n) et autant de deuxièmes générateur (24) de fréquence associés.

**8.** Système (1) selon l'une des revendications 1 à 7, dans lequel l'interface de communication sans fil (41, 42) comprend l'un au moins des éléments suivants : une interface radiofréquence, une interface optique et/ou une interface inductive.

**9.** Système (1) selon la revendication 8, dans lequel l'interface de communication sans fil (41, 42) comprend une interface inductive, ladite interface inductive comprenant l'un au moins des bobinages émetteurs (Tx1,...,Txm) et des bobinages récepteurs (Rx1,...,Rxn) de l'ensemble émetteur (10) et de l'ensemble récepteur (20), respectivement.

**10.** Procédé (S) pour la détection d'objets métalliques avec un système (1) de détection à ondes continues selon l'une des revendications 1 à 8, ledit procédé (S) comprenant les étapes suivantes :

> S1 : émettre un champ magnétique au niveau d'au moins un bobinage émetteur (Tx1,...,Txm) à partir d'un signal électrique correspondant ayant une fréquence qui est fonction de la première fréquence F1 de la première horloge (12)
> S2 : produire au niveau d'au moins un bobinage récepteur (Rx1,...,Rxn) au moins un signal électrique en fonction du champ magnétique émis à l'étape S1
> S3 : déterminer un signal électrique ayant une fréquence qui est fonction de la deuxième fréquence F2 de la deuxième horloge (22)
> S4 : comparer le signal électrique produit à l'étape S2 et le signal électrique déterminé à l'étape S3
> S5 : détecter un instant de passage à zéro de l'ensemble des signaux électriques dont la fréquence est fonction de la première fréquence F1 ou de l'ensemble des signaux électriques dont la fréquence qui est fonction de la deuxième fréquence F2
> S6 : générer un signal de réalignement de phase synchronisé sur l'instant de passage à zéro détecté à l'étape S5 et
> S7: transmettre à l'aide d'une interface de communication (41, 42) sans fil le signal de réalignement de phase de la première horloge (12) et de la deuxième horloge (22) à l'ensemble émetteur (10) ou à l'ensemble récepteur (20).

**11.** Procédé selon la revendication 10, dans lequel les étapes S2 et S3 sont simultanées.

**12.** Procédé selon l'une des revendications 10 ou 11, dans lequel, au cours de l'étape S5, l'instant de passage à zéro est détecté lorsque l'ensemble des signaux électriques dont la fréquence est fonction de la première fréquence F1 ou l'ensemble des signaux électriques dont la fréquence qui est fonction de la deuxième fréquence F2 ont une pente positive.

**13.** Procédé selon l'une des revendications 10 à 12, dans lequel, au cours de l'étape S6, le signal de réalignement de phase est généré au niveau de l'ensemble émetteur (10) et transmis à l'ensemble récepteur (20), de sorte à réaligner la phase de la deuxième horloge (22) sur celle de la première horloge (12).

**14.** Procédé selon l'une des revendications 10 à 12, dans lequel, au cours de l'étape S6, le signal de réalignement de phase est généré au niveau de l'ensemble récepteur (20) et transmis à l'ensemble émetteur (10), de sorte à réaligner la phase de la première horloge (12) sur celle de la deuxième horloge (22).

**Patentansprüche**

**1.** System (1) mit ungedämpften Wellen zur Detektion von Metallgegenständen, eine Senderanordnung (10) und eine Empfängeranordnung (20) umfassend, wobei:

> - die Senderanordnung (10) mindestens eine Senderspule (Tx1, ..., Txm) umfasst, die in einer ersten Säule (2) untergebracht ist, und eine erste Uhr (12), die konfiguriert ist, um ein erstes elektrisches Signal mit einer gegebenen ersten Frequenz F1 zu senden, wobei mindestens ein erster Frequenzgenerator (14), der konfiguriert ist, um an eine entsprechende Senderspule (Tx1, ..., Txm) ein elektrisches Signal zu übertragen, eine Frequenz aufweist, die mit der ersten Frequenz F1 synchronisiert ist, so dass die Senderspule (Tx1, ..., Txm) ein Magnetfeld sendet; und
> - die Empfängeranordnung (20) umfasst:

> > *mindestens eine Empfängerspule (Rx1, ..., R×n), die in einer zweiten Säule (3) separat von der ersten Säule (2) untergebracht ist, wobei die Empfängerspule (Rx1, ..., Rxn) konfiguriert ist, um ein elektrisches Signal in Abhängigkeit von dem von der Senderspule (Tx1, ..., Txm) gesendeten Magnetfeld zu erzeugen, eine zweite Uhr (22), die konfiguriert ist, um ein zweites Signal mit einer gegebenen zweiten Frequenz F2 zu senden, und mindestens einen zweiten Frequenzgenerator (24), der konfiguriert ist, um ein elektrisches Signal zu bestimmen, das eine Frequenz aufweist, die mit der zweiten Frequenz F2 synchronisiert ist; und
> > *eine Einheit zum Vergleich (26) des elektrischen Signals, das von der Empfängerspule (Rx1, ..., Rxn) erzeugt wurde, mit dem elektrischen Signal, das vom zweiten Frequenzgenerator (24) bestimmt wurde;

wobei das Detektionssystem (1) **dadurch gekennzeichnet ist, dass** es ferner umfasst:

- einen Detektor (50), der konfiguriert ist, um einen Zeitpunkt des Nulldurchgangs aller elektrischen Signale zu erfassen, die von mindestens einem ersten Frequenzgenerator (14) übertragen wurden oder mindestens einem zweiten Frequenzgenerator (24);
- einen Signalgenerator (60), der konfiguriert ist, um ein Phasenneuausrichtungssignal zu generieren, das mit dem Zeitpunkt des Nulldurchgangs synchronisiert ist, der vom Detektor (50) erfasst wurde; und
- Übertragungsmittel (40), die eine drahtlose Kommunikationsschnittstelle (41, 42) umfassen, die konfiguriert sind, um an die Senderanordnung (10) oder die Empfängeranordnung (20) das Phasenneuausrichtungssignal zu übertragen, um die Phase der ersten Uhr (12) und der zweiten Uhr (22) neu auszurichten.

2. System (1) nach Anspruch 1, wobei die gegebene zweite Frequenz F2 im Wesentlichen gleich der gegebenen ersten Frequenz F1 ist.

3. System (1) nach einem der Ansprüche 1 oder 2, wobei die erste Uhr (12) in der ersten Säule (2) angeordnet ist und die zweite Uhr (22) in der zweiten Säule (3) angeordnet ist.

4. System (1) nach einem der Ansprüche 1 oder 2, wobei die erste Uhr (12) und die zweite Uhr (22) nach außerhalb der ersten Säule (2) und der zweiten Säule (3) verlagert sind.

5. System (1) nach einem der Ansprüche 1 bis 4, wobei der Detektor (50) konfiguriert ist, um einen Zeitpunkt des Nulldurchgangs aller elektrischen Signale zu erfassen, die vom ersten Frequenzgenerator (14) übertragen wurden oder vom zweiten Frequenzgenerator (24), wenn die Signale eine positive Steigung aufweisen.

6. System (1) nach einem der Ansprüche 1 bis 5, wobei die erste Säule (2) von der zweiten Säule (3) getrennt ist, so dass das Detektionssystem (1) über keine physikalische Verbindung zwischen der ersten Säule (2) und der zweiten Säule (3) verfügt.

7. System (1) nach einem der Ansprüche 1 bis 6, wobei die Senderanordnung (10) mindestens zwei Senderspulen (Tx1, ..., Txm) umfasst und ebenso viele erste Generatoren (14) von zugehörigen Frequenzen, wobei die Empfängeranordnung (20) mindestens zwei Empfängerspulen (Rx1, ..., Rxn) umfasst und ebenso viele zweite Generatoren (24) von zugehörigen Frequenzen.

8. System (1) nach einem der Ansprüche 1 bis 7, wobei die drahtlose Kommunikationsschnittstelle (41, 42) mindestens eines der folgenden Elemente umfasst: eine Radiofrequenzschnittstelle, eine optische Schnittstelle und/oder eine induktive Schnittstelle.

9. System (1) nach Anspruch 8, wobei die drahtlose Kommunikationsschnittstelle (41, 42) eine induktive Schnittstelle umfasst, wobei die induktive Schnittstelle mindestens eine der Senderspulen (Tx1, ..., Txm) und eine der Empfängerspulen (Rx1, ..., Rxn) der Senderanordnung (10) beziehungsweise der Empfängeranordnung (20) umfasst.

10. Verfahren (S) zur Detektion von Metallgegenständen mit einem Detektionssystem (1) mit ungedämpften Wellen nach einem der Ansprüche 1 bis 8, wobei das Verfahren (S) die folgenden Schritte umfasst:

S1: Senden eines Magnetfelds, im Bereich mindestens einer Senderspule (Tx1, ..., Txm), ausgehend von einem entsprechenden elektrischen Signal, das eine Frequenz aufweist, die eine Funktion der ersten Frequenz F1 der ersten Uhr (12) ist,
S2: Erzeugen, im Bereich mindestens einer Empfängerspule (Rx1, ..., Rxn), von mindestens einem elektrischen Signal in Abhängigkeit des Magnetfelds, das in Schritt S1 gesendet wurde,
S3: Bestimmen eines elektrischen Signals, das eine Frequenz aufweist, die eine Funktion der zweiten Frequenz F2 der zweiten Uhr (22) ist,
S4: Vergleichen des elektrischen Signals, das in Schritt S2 erzeugt wurde, und des elektrischen Signals, das in Schritt S3 bestimmt wurde,
S5: Erfassen eines Zeitpunkts des Nulldurchgangs aller elektrischen Signale, deren Frequenz eine Funktion der ersten Frequenz F1 ist, oder aller elektrischen Signale, deren Frequenz eine Funktion der zweiten Frequenz F2 ist,
S6: Generieren eines Phasenneuausrichtungssignals, das mit dem Zeitpunkt des Nulldurchgangs synchronisiert ist, der in Schritt S5 erfasst wurde, und
S7: Übertragen, mit Hilfe einer drahtlosen Kommunikationsschnittstelle (41, 42), des Phasenneuausrichtungssignals der ersten Uhr (12) und der zweiten Uhr (22) an die Senderanordnung (10) oder die Empfängeranordnung (20).

**11.** Verfahren nach Anspruch 10, wobei die Schritte S2 und S3 gleichzeitig sind.

**12.** Verfahren nach einem der Ansprüche 10 oder 11, wobei, während des Schritts S5, der Zeitpunkt des Nulldurchgangs erfasst wird, wenn alle elektrischen Signale, deren Frequenz eine Funktion der ersten Frequenz F1 ist, oder alle elektrischen Signale, deren Frequenz eine Funktion der zweiten Frequenz F2 ist, eine positive Steigung aufweisen.

**13.** Verfahren nach einem der Ansprüche 10 bis 12, wobei während des Schritts S6 das Phasenneuausrichtungssignal im Bereich der Senderanordnung (10) generiert und an die Empfängeranordnung (20) übertragen wird, so dass die Phase der zweiten Uhr (22) an der der ersten Uhr (12) neu ausgerichtet wird.

**14.** Verfahren nach einem der Ansprüche 10 bis 12, wobei während des Schritts S6 das Phasenneuausrichtungssignal im Bereich der Empfängeranordnung (20) generiert und an die Senderanordnung (10) übertragen wird, so dass die Phase der ersten Uhr (12) an der der zweiten Uhr (22) neu ausgerichtet wird.

**Claims**

**1.** A continuous wave metal object detection system (1) comprising a transmitter assembly (10) and a receiver assembly (20), wherein :

- the transmitter assembly (10) comprises at least one transmitter coil (Tx1, ..., Txm) housed in a first column (2), a first clock (12) configured to transmit a first electrical signal at a given first frequency F1, at least one first frequency generator (14) configured to transmit to a corresponding transmitter coil (Tx1, ..., Txm) an electrical signal having a frequency that is synchronized to the first frequency F1; and...,Txm) an electrical signal having a frequency that is synchronised to the first frequency F1 so that the transmitter coil (Tx1,...,Txm) emits a magnetic field; and
- the receiver assembly (20) comprises :

* at least one receiver coil (Rx1,...,Rxn) housed in a second column (3), distinct from the first column (2), said receiver coil (R×1,...,R×n) being configured to produce an electric signal as a function of the magnetic field emitted by the transmitter coil (Tx1,...,Txm), a second clock (22) configured to transmit a second signal at a second given frequency F2, and at least one second frequency generator (24) configured to determine an electric signal having a frequency that is different from the first frequency.Txm), a second clock (22) configured to transmit a second signal at a given second frequency F2, and at least one second frequency generator (24) configured to determine an electrical signal having a frequency that is synchronised with the second frequency F2; and

* a unit for comparing (26) the electrical signal produced by the receiver winding (R×1,...,R×n) with the electrical signal determined by the second frequency generator (24);

the detection system (1) being **characterised in that** it further comprises :

- a detector (50) configured to detect a zero-crossing time of all electrical signals transmitted by the at least one first frequency generator (14) or the at least one second frequency generator (24);
- a signal generator (60) configured to generate a phase realignment signal synchronised to the zero crossing time detected by the detector (50); and
- transmission means (40) comprising a wireless communication interface (41, 42) configured to transmit to the transmitter assembly (10) or receiver assembly (20) the phase realignment signal to realign the phase of the first clock (12) and the second clock (22).

**2.** The system (1) of claim 1, wherein the given second frequency F2 is substantially equal to the given first frequency F1.

**3.** The system (1) according to any of claims 1 or 2, wherein the first clock (12) is placed in the first column (2) and the second clock (22) is placed in the second column (3).

**4.** The system (1) according to any of claims 1 or 2, wherein the first clock (12) and the second clock (22) are relocated outside the first column (2) and the second column (3).

**5.** The system (1) according to any of claims 1 to 4, wherein the detector (50) is configured to detect a zero-crossing time of the set of electrical signals transmitted by the first frequency generator (14) or the second frequency generator (24) when said signals have a positive slope.

**6.** The system (1) according to any of claims 1 to 5, wherein the first column (2) is separated from the second column (3) such that the detection system (1) has no physical connection between the first column (2) and the second column (3).

7. A system (1) according to any of claims 1 to 6, wherein the transmitter assembly (10) comprises at least two transmitter windings (Tx1,...,Txm) and as many associated first frequency generators (14), the receiver assembly (20) comprises at least two receiver windings (Rx1,...,Rxn) and as many associated second frequency generators (24).

8. The system (1) according to any of claims 1 to 7, wherein the wireless communication interface (41, 42) comprises at least one of: a radio frequency interface, an optical interface and/or an inductive interface.

9. The system (1) according to claim 8, wherein the wireless communication interface (41, 42) comprises an inductive interface, said inductive interface comprising at least one of the transmitter coils (T×1,...,T×m) and receiver coils (R×1,...,R×n) of the transmitter assembly (10) and the receiver assembly (20), respectively.

10. A method (S) for detecting metal objects with a continuous wave detection system (1) according to any of claims 1 to 8, said method (S) comprising the following steps:

S1: transmitting a magnetic field at at least one transmitting coil (Tx1,...,Txm) from a corresponding electrical signal having a frequency which is a function of the first frequency F1 of the first clock (12)

S2: producing at at least one receiving coil (R×1,... R×n) at least one electrical signal as a function of the magnetic field emitted in step S1

S3: determining an electrical signal having a frequency which is a function of the second frequency F2 of the second clock (22)

S4: comparing the electrical signal produced in step S2 and the electrical signal determined in step S3

S5: detecting a zero-crossing time of the set of electrical signals whose frequency is a function of the first frequency F1 or of the set of electrical signals whose frequency is a function of the second frequency F2

S6: generating a phase realignment signal synchronized to the zero-crossing instant detected in step S5 and

S7: transmitting using a wireless communication interface (41, 42) the phase realignment signal from the first clock (12) and the second clock (22) to the transmitter assembly (10) or to the receiver assembly (20).

11. The method of claim 10, wherein steps S2 and S3 are simultaneous.

12. A method according to any of claims 10 or 11, wherein in step S5 the zero crossing time is detected when all of the electrical signals whose frequency is a function of the first frequency F1 or all of the electrical signals whose frequency is a function of the second frequency F2 have a positive slope.

13. The method according to any of claims 10 to 12, wherein in step S6 the phase realignment signal is generated at the transmitter assembly (10) and transmitted to the receiver assembly (20), so as to realign the phase of the second clock (22) with that of the first clock (12).

14. The method according to any of claims 10 to 12, wherein in step S6 the phase realignment signal is generated at the receiver assembly (20) and transmitted to the transmitter assembly (10), so as to realign the phase of the first clock (12) with that of the second clock (22).

EP 3 987 322 B1

Fig. 1

**Fig. 2**

Fig. 3

**Fig. 4**

Fig. 5

EP 3 987 322 B1

S

Emettre un champ magnétique au niveau d'au moins un bobinage émetteur à partir d'un signal électrique correspondant ayant une fréquence qui est fonction de la première fréquence de la première horloge — S1

Produire au niveau d'au moins un bobinage récepteur au moins un signal électrique en fonction du champ magnétique émis — S2

Déterminer un signal électrique ayant une fréquence qui est fonction de la deuxième fréquence de la deuxième horloge — S3

Comparer les signaux électriques produits — S4

Détecter un instant de passage à zéro de l'ensemble des signaux électriques — S5

Générer un signal de réalignement de phase synchronisé sur l'instant de passage à zéro — S11

Transmettre par voie sans fil le signal de réalignement de phase de la première horloge et de la deuxième horloge — S12

## Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2545218
- EP 1750147 A
- EP 1892542 A